Europäisches Patentamt

European Patent Office

Office européen des brevets

(11) Veröffentlichungsnummer: **0 360 133**
**A2**

(12) **EUROPÄISCHE PATENTANMELDUNG**

(21) Anmeldenummer: 89116853.6

(22) Anmeldetag: 12.09.89

(51) Int. Cl.5: **B01D 63/02 , F28F 21/06**

(30) Priorität: 19.09.88 DE 3831786

(43) Veröffentlichungstag der Anmeldung:
28.03.90 Patentblatt 90/13

(84) Benannte Vertragsstaaten:
AT BE CH DE ES FR GB GR IT LI LU NL SE

(71) Anmelder: Akzo N.V.
Postbus 9300 Velperweg 76
NL-6800 SB Arnhem(NL)

(72) Erfinder: Wollbeck, Rudi
Am Stadtwald 24
D-8765 Erlenbach(DE)
Erfinder: Zang, Thomas
Ziegelbergweg 9
D-8752 Goldbach(DE)

(74) Vertreter: Fett, Günter
Akzo Patente GmbH Kasinostrasse 19 - 23
D-5600 Wuppertal 1(DE)

(54) **Stoff- und/oder Wärmetauscher.**

(57) Stoff- und/oder Wärmetauscher, bestehend aus einer Vielzahl von Kapillaren, deren Enden in eine Vergußmasse eingebettet sind, und einem Gehäuse, in welchem die Kapillaren mit der Vergußmasse derart angeordnet sind, daß die Vergußmasse eine flüssigkeitsdichte Trennung zwischen Kapillarlumen und -außenraum darstellt, dadurch gekennzeichnet, daß zwischen Vergußmasse und Gehäuse ein elastisches, die Längenänderungsdifferenz zwischen Kapillarbündel und Gehäuse kompensierendes Element angeordnet ist.

Fig 1

EP 0 360 133 A2

## Stoff- und/oder Wärmetauscher

Die Erfindung betrifft Stoff- und/oder Wärmetauscher, die eine Vielzahl von Kapillaren enthalten.

Unter Kapillaren werden Hohlfäden oder Rohre verstanden, die in der Regel geringes Lumen (Innendurchmesser) und eine geringe Wandstärke aufweisen, wobei als Maß für die Effektivität des Stoff- und/oder Wärmeaustauschers das Verhältnis zwischen Wandstärke und Lumen angegeben wird. Bei Kapillaren liegt das Verhältnis von Wandstärke S und Lumen L im Bereich von

$$1 : 5 \leq S/L \leq 1 : 40,$$

vorzugsweise

$$1 : 10 \leq S/L \leq 1 : 30.$$

Werden Kapillaren nur zum Wärmeaustausch verwendet, besitzen die Wände der Kapillaren keine oder nur sehr geringe Porosität, während die Wände der Kapillaren zum Stoffaustausch jeweils Poren mit einer dem auszutauschenden Stoff angepaßten Größe aufweisen.

Stoff- und/oder Wärmetauscher, die eine Vielzahl von Kapillaren enthalten, sind in der Regel derart aufgebaut, daß die Enden der Kapillaren in eine Vergußmasse eingebettet sind. Die Kapillaren mit der Vergußmasse sind in einem Gehäuse derart angeordnet, daß die Vergußmasse eine flüssigkeitsdichte Trennung zwischen Kapillarlumen und Kapillaraußenraum darstellt.

Üblicherweise werden bei Stoff- und/oder Wärmetauschern die Kapillarenden in das sie umgebende Gehäuserohr flüssigkeitsdicht und druckfest mittels eines Reaktionsharzes oder thermoplastischen Polymers eingebettet. Diese Stoff-und/oder Wärmetauscher werden auch Module genannt.

Insbesondere bei Modulen mit größeren Gehäusedurchmessern (etwa ab Ø 50 mm) führt ein fest mit dem Gehäuse vergossenes Kapillarbündel häufig zu Abrißerscheinungen und Undichtheiten.

Extreme Betriebsbedingungen (Dampfsterilisation, Temperaturspiele, Differenzdrücke zwischen Extra- und Intrakapillarraum) sowie spezifische Membraneigenschaften (Schrumpf, Naßlängung) bauen zwischen Kapillarverguß und Gehäuse derart hohe Randspannungen auf, daß eine sichere Verbindung, auf Grund der Haftkraft des Vergusses, nicht gewährleistet ist.

Auch Klemmflanschverbindungen, bei welchen ein teilelastisches Vergußmaterial (z.B. Polyurethan) zwischen zwei Metallflanschen verspannt wird, lösen das Problem nicht.

Infolge des Kaltfließverhaltens des elastischen Vergußmaterials, führt eine solche Verbindung, insbesondere bei thermischer Beanspruchung, leicht zu Leckagen.

Aufgabe der vorliegenden Erfindung ist es, diese Nachteile zu beseitigen. Hierzu wird ein Modulkonzept vorgeschlagen, bei welchem die Kapillareinbettung separat durchgeführt und das vergossene Kapillarbündel mit Hilfe mechanischer Dichtelemente (Flansch-Schraubverbindung, Rundschnurringe) im Gehäuse montiert werden kann. Insbesondere soll ein Stoff-und/oder Wärmetauscher zur Verfügung gestellt werden, welcher eine besonders gute Effektivität aufweist.

Diese Aufgabe wird bei einem Stoff- und/oder Wärmetauscher gemäß Oberbegriff des Anspruchs 1 durch die kennzeichnenden Merkmale des Anspruchs 1, vorteilhafterweise durch die kennzeichnenden Merkmale des Anspruchs 2 gelöst.

Die Kompensation der Längenänderung des Kapillarbündels übernimmt ein elastischer Membranring, über den auch die auftretenden Differenzkräfte der Druckunterschiede zwischen Kapillarlumen- und Außenraum abgeleitet werden. Die Weichheit bzw. Elastizität des Membranringes ist in einem weiten Bereich über die Gummiqualität und geometrische Ausbildung des Membranringes einstellbar. Es stehen eine Reihe elastischer Werkstoffe - ähnlich wie bei Rundschnurringen -zur Auswahl. Das Material bleibt dauerelastisch und wird vorzugsweise in zwei Flanschringteile einvulkanisiert. Der Membranring kann aber auch aus anderen Materialien, beispielsweise aus Metallen bestehen.

Die Konstruktion gestattet es zudem, das Kapillarbündel im Fall eines Membrandefektes, oder wenn Membraneinsätze mit anderen Trenneigenschaften gewünscht bzw. erforderlich werden, problemlos gegen ein anderes auszutauschen. Das Modulkonzept ist sowohl für Stoff- als auch Wärmetauscher anwendbar.

Für die Kapillareinbettung kommen als Vergußmasse reaktionsfähige Gießharze, vorzugsweise Polyurethane oder Epoxidharze, wie auch thermoplastische Kunststoffe infrage.

Aufgrund des erfindungsgemäß vorgesehenen elastischen Elements wird es möglich, den Stoff-und/oder Wärmeaustausch, insbesondere den Wärmeaustausch durch konstruktive Maßnahmen noch intensiver zu gestalten, weil nunmehr die durch die gesteigerte Intensität des Wärmeaustausches stärker schwankende Längendifferenz zwischen Kapillaren und Gehäuse wirksam ausgeglichen werden kann.

Hierzu wird erfindungsgemäß vorgeschlagen, im Zentrum des Membranbündels einen die Vergußmasse überragenden Verdrängungskörper anzuordnen, welcher eine Zwangsströmung im Außenraum des Moduls zwischen den Kapillaren hindurch vom Zentrum, welches aufgrund des Verdrängerkörpers keine Kapillaren aufweist, zum Gehäuse hin (und/oder umgekehrt) bewirkt.

Der Verdrängungskörper ist bevorzugt rohrförmig ausgebildet und weist Durchgangsöffnungen auf, so daß über den Verdrängerkörper der Extrakapillarraum (Außenraum) des Moduls mit einem Fluid oder Gas beaufschlagt werden kann. Die Beaufschlagung erfolgt bevorzugt zunächst von außen ins Zentrum axial, und nach Verlassen des Verdrängerkörpers radial.

Es ist günstig, in der Vergußmasse bei deren Herstellung direkt Vorkehrungen zu treffen, um eine gute Verbindung zwischen elastischem Element und Vergußmasse zu gewährleisten. Dies kann beispielsweise durch Einbetten von Metall- oder Kunststoffteilen in die Vergußmasse bei deren Herstellung erreicht werden.

Ebenso können die zur Befestigung des elastischen Elements an der Vergußmasse erforderlichen Gewinde o.ä. entweder mechanisch in die Vergußmasse eingearbeitet oder als Formteile eingegossen werden.

Durch den Verdrängerkörper wird es auch möglich, den Modulfüllgrad im Einbettbereich der Kapillarbündel gegenüber dem Extrakapillarraum zu erhöhen.

Besonders günstig ist es, wenn alle Bestandteile aus solchen Materialien hergestellt sind, daß der daraus hergestellte Modul dampfsterilisierbar ist.

Ebenfalls ist es zweckmäßig, die Kapillaren mit einer perforierten Schutzhülle zu umgeben.

Die Erfindung wird anhand von Figuren und eines Beispiels näher erläutert.

Es zeigen:

Figur 1 einen Ausschnitt aus einem Stoff- und/oder Wärmetauscher

Figur 2 in schematischer Darstellung einen Axialschnitt einer bevorzugten Aufführungsform

Figur 3 einen Detailausschnitt aus Figur 2

Figur 4 eine weitere Variante

Figur 5 Ausführungsbeispiel eines elastischen Ringflansches

Die äußere Geometrie des Moduls wird durch das Gehäuserohr und die beiden Anschlußflansche bestimmt.

Im Modulgehäuse ist ein Kapillar- oder Membranbündel installiert.

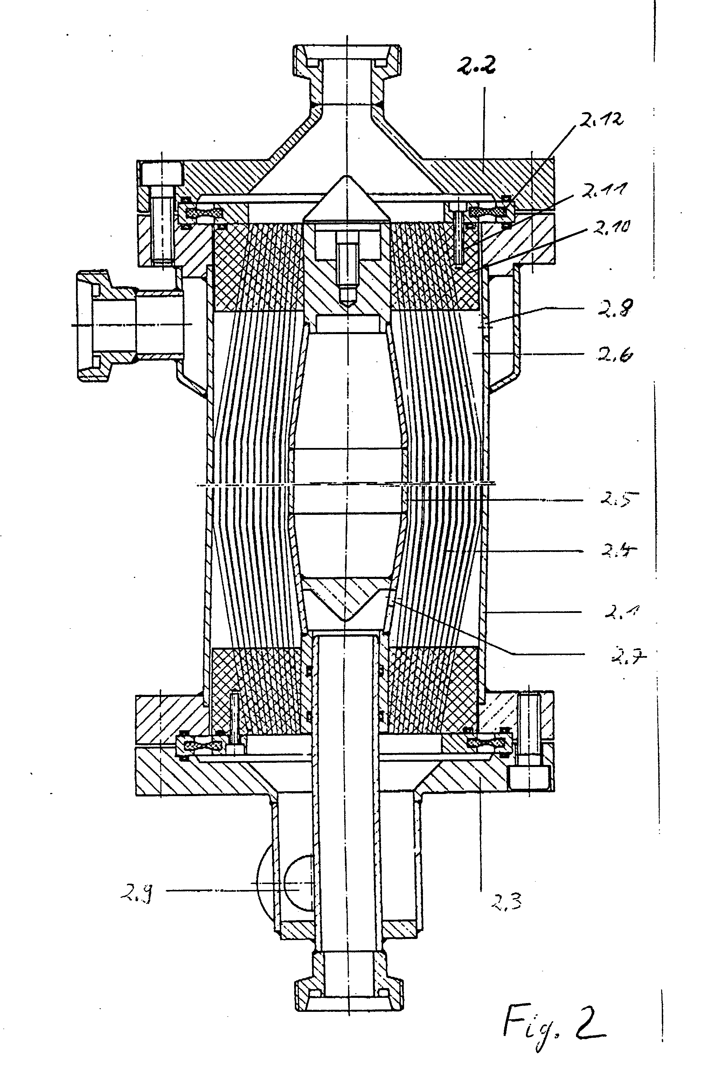

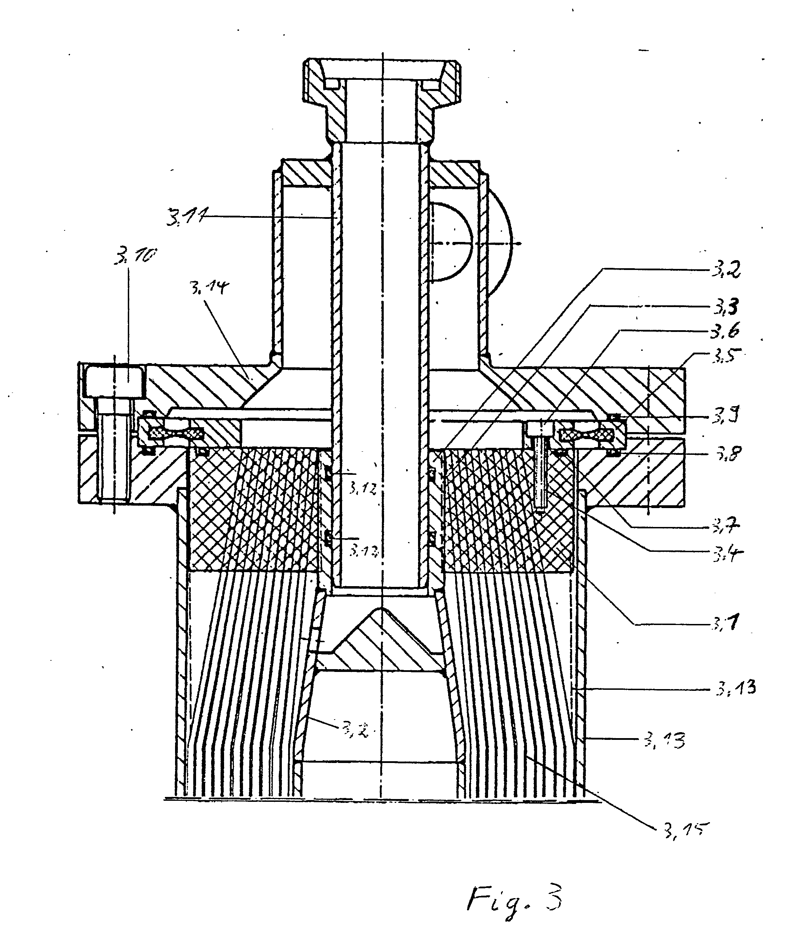

Das Ausführungsbeispiel (Fig. 2 bis 3) zeigt ein austauschbares Kapillarbündel mit einem zentral angeordneten Verdrängerkörper durch den der Extrakapillarraum des Moduls mit einem Fluid beaufschlagt werden kann.

Den Perforationsöffnungen 2.7 des Verdrängerkörpers gegenüberliegend befinden sich im Gehäuserohr ebenfalls Öffnungen 2.8 die in einen ringförmigen Sammelkanal münden. Durch diese Anordnung wird eine intensive Beströmung des Extrakapillarraumes gewährleistet.

Die Membran- oder Kapillarenden werden mit einem flüssigen Reaktionsharz eingebettet. Gleichzeitig mit der Kapillareinbettung erfolgt auch die druck- und flüssigkeitsdichte Verbindung des Reaktionsharzes mit dem Verdrängerkörper.

Durch entsprechende Formgebung des Verdrängerkörpers im Vergußbereich wird die erforderliche Haftfestigkeit des Reaktionsharzes am Verdrängerkörper erreicht.

Im Vergußblock der eingebetteten Kapillarenden sind Gewindebohrungen zur Befestigung des elastischen Ringflansches angebracht. Dieser wird mittels Edelstahlschrauben 3.6 und einem Rundschnurring 3.7 druck- und flüssigkeitsdicht mit dem Vergußblock verschraubt.

Die äußere Abdichtung übernehmen die Rundschnurringe 3.8 und 3.9, welche über die Flanschschrauben 3.10 druckfest zwischen dem Flansch des Gehäuserohres und dem Anschlußflansch verspannt werden. Der Anschlußflansch ist mit einem zentralen Rohrstück 3.11 versehen, welches in den zentral angeordneten Verdrängerkörper ragt und den Intra- vom Extrakapillarraum, durch zwei Rundschnurringe 3.12 abgedichtet, trennt.

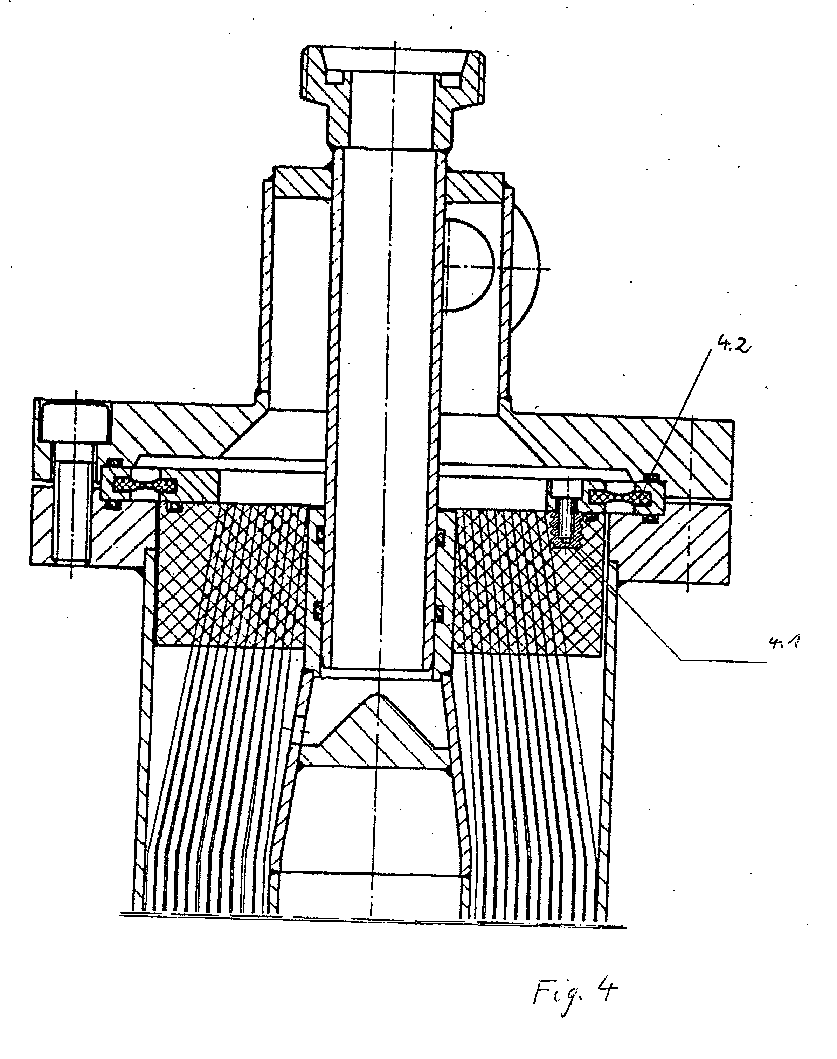

Zum Schutz des Kapillarbündels ist zwischen den Vergußblöcken eine perforierte Schutzhülle 3.13 angebracht. Bei hohen Temperatur- und Druckbeanspruchungen und speziellen Reaktionsharzen ist es vorteilhaft, wenn die Gewindebohrungen zur Befestigung des elastischen Ringflansches in Form vorgefertigter Gewindeelemente 4.1 gleichzeitig mit dem Kapillarverguß eingebettet werden (Fig. 4).

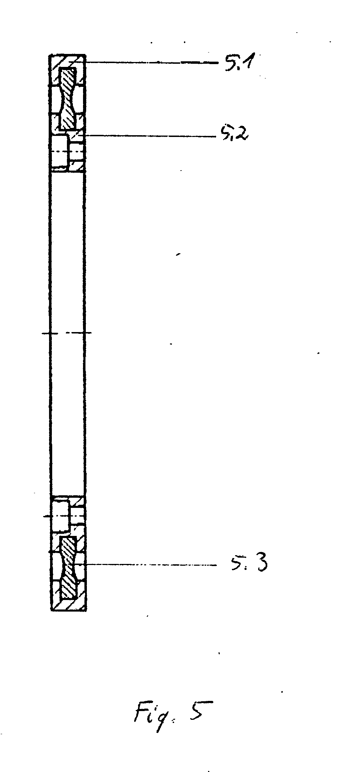

Figur 5 zeigt ein Ausführungsbeispiel eines elastischen Ringflansches.

Zwischen einem äußeren Haltering 5.1, im Ausführungsbeispiel aus Edelstahl, und einem inneren Haltering 5.2 ist ein Formteil 5.3 einvulkanisiert. Sowohl die geometrische Ausbildung des Formteils als auch der Werkstoff können dem jeweiligen Anwendungsfall angepaßt werden.

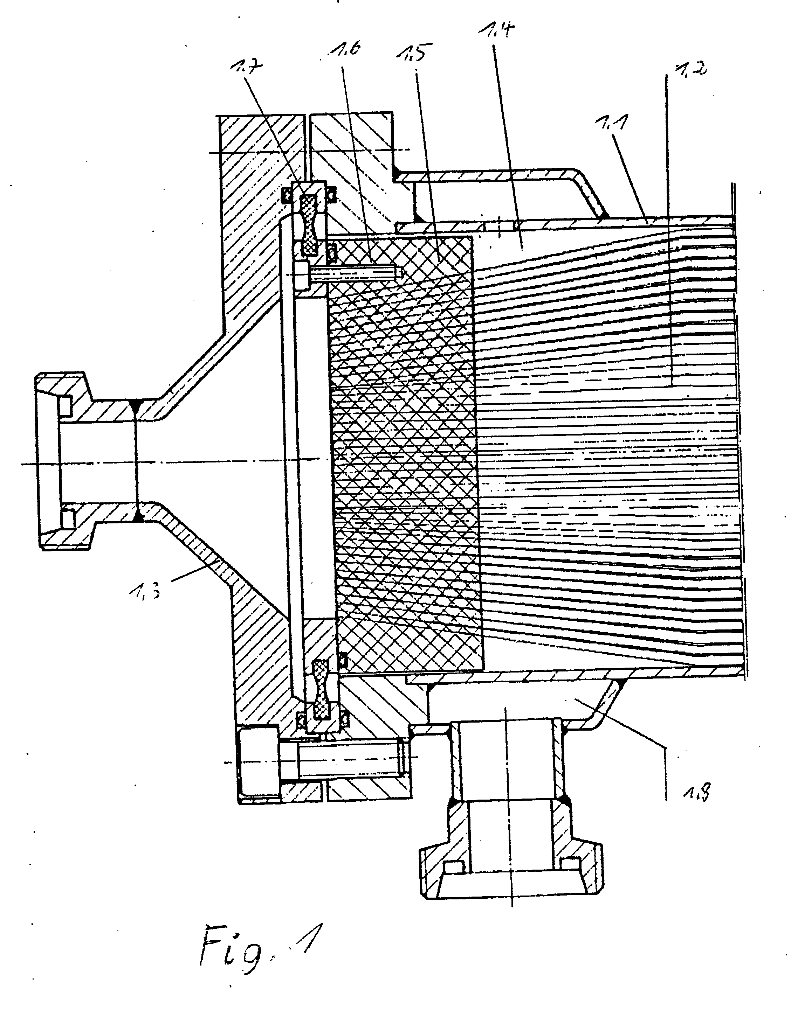

In Figur 1 ist das Gehäuserohr symmetrisch aufgebaut und besitzt an allen Enden An- und Abströmtaschen 1.8. Das Membranpaket 1.2 hat keinen Verdrängungskörper. Die elastische Lagerung sowie die Kompensation der Längenänderung durch den elastischen Ringflansch entspricht dem Vorhergesagten.

Ausführungsbeispiel:

Für einen Stoffaustauschversuch wurden 43 000 Zellulose-Kapillarmembranen zu einem Modul verarbeitet. Die innere Austauschfläche betrug 8,9 m², die äußere Austauschfläche 9,9 m². Die Kapillar-Einbettmasse bestand aus einem Epoxid-Harzgemisch. Nach der Montage des Membraneinsatzes in das Modulgehäuse wurde dieses zunächst auf Dichtheit der Kapillare und der Einbettung überprüft (Integritätstest). Hierbei werden die Kapillare sowohl intra- als auch extrakapillarseitig für 10 Minuten einem Gasdruck von 1 bar ausgesetzt. Der Druckabfall betrug hierbei 265 mbar was den Modul als dicht auswies (Mastreck Filtertest). Anschließend durchlief der Modul 5 Dampfsterilisationszyklen, wobei jeder Zyklus sowohl den Intra- als auch Extrakapillarraum für 30 Minuten mit 121° C Sattdampf belastete.

Beim anschließenden Dichtheitstest registrierte das Meßgerät nach 10 Minuten Druckhaltung 272 mbar Druckabfall. (Für diese Modulgröße schwankt der Druckabfall bei einem dichten Modul (Diffusion) zwischen 250 und 300 mbar).

Zur Bewertung der Leistungsfähigkeit des Moduls wurde der Stofftransportkoeffizient für eine 1M KCL-Lösung durch die für diesen Modul benutzte Membran gemessen. Er betrug

$K_0 = 8,25 \times 10^{-3}$ cm/min.

Ein Labormodul mit 1324 Kapillaren lieferte bei vergleichbaren Versuchsbedingungen einen

$K_0 = 9,2 \times 10^{-3}$ cm/min.

Setzt man den $K_0$-Wert des Labormoduls mit 100 an, so ergibt sich bei einer um den Faktor 32,5 vergrößerten Ausführung ein Wirkungsgrad von $(8,25 \times 100) : 9,2 = 89,7\%$.

Bezeichnungsliste:

1.1; 2.1; 3.13; Gehäuserohr
1.3; 2.2; 2.3; 3.14; Anschlußflansch
1.2; 2.4; 3.15: Kapillarbündel
2.5; 3.2; Verdrängerkörper
1.4; 2.6; Extrakapillar- oder Außenraum
1.5; 2.10: 3.1; Vergußmasse, Vergußblock
1.6; 2.11; 3.4; Gewindebohrungen
1.7; 2.12; 3.5; 4.2; elastischer Ringflansch
3.7; 3.8; 3.9; 3.12; Dichtungsschnur

Identische Teile sind der Übersicht halber nicht in allen Figuren bezeichnet.

Ansprüche

1. Stoff- und/oder Wärmetauscher, bestehend aus einer Vielzahl von Kapillaren, deren Enden in eine Vergußmasse eingebettet sind, und einem Gehäuse, in welchem die Kapillaren mit der Vergußmasse derart angeordnet sind, daß die Vergußmasse eine flüssigkeitsdichte Trennung zwischen Kapillarlumen und -außenraum darstellt, dadurch gekennzeichnet, daß zwischen Vergußmasse und Gehäuse ein elastisches, die Längenänderungsdifferenz zwischen Kapillarbündel und Gehäuse kompensierendes Element angeordnet ist.

2. Stoff- und/oder Wärmeaustauscher nach Anspruch 1, dadurch gekennzeichnet, daß das elastische Element ein Ringflansch ist.

3. Stoff- und/oder Wärmetauscher nach Anspruch 1 oder 2, dadurch gekennzeichnet, daß im Zentrum des Membranbündels ein die Vergußmasse überragender Verdrängerkörper angeordnet ist, der eine Zwangsströmung im Außenraum zwischen den Kapillaren hindurch vom Zentrum zum Gehäuse hin bewirkt.

Fig. 1

Fig. 2

3.11

3.10

3.14

3.2

3,3

3.6

3.5

3,9

3,8

3,12

3.13

3,7

3.4

3,1

3,13

3,2

3,13

3,15

Fig. 3

Fig. 4

5.1

5.2

5.3

Fig. 5